# NEUE EUROPÄISCHE PATENTSCHRIFT

(11) **EP 0 543 228 B2**
(45) Veröffentlichungstag und Bekanntmachung des Hinweises auf die Entscheidung über den Einspruch: **09.07.2003**
(45) Hinweis auf die Patenterteilung: 18.09.1996
(21) Anmeldenummer: 92118956.9
(22) Anmeldetag: 05.11.1992
(51) Int. Cl.: C08G 18/63, C08G 18/42, C08G 18/72, C08G 18/08, C09D 175/06, C09J 175/06

(54) **Wässrige Bindemittelkombination und ihre Verwendung**
Aqueous binder combination and its use
Combinaison aqueuse de liants et leur utilisation

(30) Priorität: 18.11.1991 DE 4137896
(43) Veröffentlichungstag der Anmeldung: 26.05.1993
(73) Patentinhaber: BAYER AG, 51368 Leverkusen (DE)
(72) Erfinder: Schneider, Volker, Dr., W-4175 Wachtendonk 1 (DE); Blum, Harald, Dr., W-4175 Wachtendonk 2 (DE); Kubitza, Werner, Dipl.-Ing., W-5090 Leverkusen (DE); Probst, Joachim, Dr., W-5090 Leverkusen (DE)

(56) Entgegenhaltungen:
- EP-A- 0 349 979
- EP-A- 0 358 979
- EP-A- 0 477 998
- EP-A- 0 542 105
- GB-A- 1 583 172
- US-A- 4 318 833
- R. Lambourne "Paint and Surface Coatings", Theory and Practice, New York, 1988, Seiten 61-75, 92-94, 97-100

## Beschreibung

Die Erfindung betrifft eine wäßrige Bindemittelkombination auf Basis von in Wasser dispergier- bzw. lösbaren Carboxylat- und Hydroxylgruppen enthaltenden, mit Vinylmonomeren gepfropften Polyesterharzen sowie Polyisocyanaten, ein Verfahren zur Herstellung eines Beschichtungsmittels auf Basis einer derartigen Bindemittelkombination und die Verwendung von erfindungsgemäßen Bindemittelkombinationen in Lacken, Beschichtungs- und Dichtmassen.

Zweikomponenten-Polyurethanlacke des Standes der Technik haben aufgrund ihrer hervorragenden Eigenschaften eine große Bedeutung auf dem Beschichtungssektor. Von Nachteil dabei ist jedoch, daß zur Verarbeitung größere Mengen organischer Lösemittel erforderlich sind, die z.B. durch eine Nachverbrennung beseitigt werden müssen. In vielen, vor allem nichtindustriellen Anwendungsbereichen ist eine solche Nachverbrennung nicht durchführbar, so daß hier verstärkt festkörperreiche, vor allem jedoch wasserverdünnbare Beschichtungen gefordert werden, um die Lösemittelabgabe und die damit verbundene Umweltbelastung so gering wie möglich zu halten.

Die Verwendung von Wasser als flüssige Phase in Zweikomponenten-Polyurethanlacken mit freien Isocyanatgruppen ist normalerweise nicht ohne weiteres möglich, da Isocyanatgruppen nicht nur mit alkoholischen Hydroxylgruppen, sondern auch mit Wasser unter Harnstoff- und Kohlendioxidbildung reagieren. Dadurch werden in der Regel die Standzeit, die Verarbeitungszeit und die Qualität der Überzüge auf nicht praxisgerechte Werte reduziert.

Eine erste Lösungsmöglichkeit wird in der DE-OS 3 829 587 beschrieben, in der ausgewählte Polyhydroxypolyacrylate mit Polyisocyanaten, die freie Isocyanatgruppen aufweisen, zu wäßrigen 2-Komponentensystemen kombiniert werden.

Überraschenderweise wurde nun gefunden, daß spezielle, wäßrige Carboxylat- und Hydroxylgruppen enthaltende, mit Vinylmonomeren gepfropfte Polyesterharze ebenfalls mit freien Isocyanatgruppen aufweisenden Polyisocyanaten in wäßrigen 2-Komponenten-Bindemitteln eingesetzt werden können.

Gegenstand der Erfindung ist eine wäßrige Bindermittelkombination, bestehend aus:
A) einer wäßrigen Lösung oder Dispersion einer wasserverdünnbaren organischen Polyolkomponente und
B) einer Polyisocyanatkomponente einer Viskosität bei 23°C von 50 bis 10 000 mPa.s, bestehend aus mindestens einem organischen Polyisocyanat oder einer Abmischung mindestens eines organischen Polyisocyanats mit einem inerten Lösungsmittel,
dessen Menge so bemessen wird, dass in den letztendlich erhaltenen Beschichtungsmitteln maximal 20 Gew.-% Lösungsmittel, bezogen auf die Menge an Wasser, vorliegt, wobei auch das gegebenenfalls in den Polyesterdispersionen oder - lösungen noch vorliegende Lösungsmittel mit in die Berechnung eingeht, welche in der Komponente A) emulgiert vorliegt, wobei das NCO/OH Äquivalentverhältnis, bezogen auf die Isocyanatgruppe der Komponente B) und die Hydroxylgruppen der in A) vorliegenden Polyolkomponente bei 0,5 : 1 bis 5 : 1 liegt,
dadurch gekennzeichnet, daß die in A) vorliegende Polyolkomponente zu 100 Gew.-% aus mindestens einem Carboxylat- und Hydroxylgruppen aufweisenden, mit Vinylmonomeren gepfropften Polyesterharz besteht, welches ein Molekulargewicht Mn von 1500 bis 50.000, eine Hydroxylzahl von 20 bis 300 mg KOH/g Substanz und eine Säurezahl von 10 bis 80 mg KOH/g Substanz aufweist, wobei 25 bis 100 % der diese Säurezahl bewirkenden Carboxylgruppen in der Carboxylatform vorliegen, und das Umsetzungsprodukt aus
I. 99 bis 2 Gew.-% einer Monomermischung aus:
   1. 1 bis 10 Gew.-% α,β-ungesättigter Mono- oder Dicarbonsäuren mit 3 bis 16 C-Atomen.
   2. 0 bis 70 Gew.-% hydroxyfunktioneller Alkylether der (Meth)-acrylsäure mit gegebenenfalls Ethergruppen aufweisenden Hydroxyalkylresten mit 2 bis 12 Kohlenstoffatomen.
   3. 0 bis 98 Gew.-% (Meth)acrylsäure(cyclo)alkylester mit 1 bis 20 C-Atomen im Alkylrest und
   4. 0 bis 80 Gew.-% anderer copolymerisierbarer Verbindungen,
   wobei sich die zu 1. bis 4. gemachten Prozentangaben zu 100% ergänzen und
II. 1 bis 98 Gew.-% eines Polyesterpolyols mit einer Hydroxylzahl von 10 bis 500 mg KOH/g Substanz, einer Säurezahl von < 30 mg KOH/g Substanz und einem Gehalt an Doppelbindungen (berechnet als C=C, Molekulargewicht = 24) von 0 bis 15%
wobei sich die zu I. und II. gemachten Prozentangaben zu 100% ergänzen, darstellt.

Gegenstand der Erfindung ist auch ein Verfahren zur Herstellung von Beschichtungsmitteln, die aus einer wäßrigen Bindemittelkombination und gegebenenfalls aus der Lacktechnologie bekannten Hilfs- und Zusatzmitteln bestehen, durch Emulgieren einer Polyisocyanatkomponente B) einer Viskosität bei 23°C von 50 bis 10 000 mPa.s, bestehend aus mindestens einem organischen Polyisocyanat oder einer Abmischung mindestens eines organishen Polysocyanats mit einem inerten Lösungsmittel
dessen Menge so bemessen wird, dass in den letztendlich erhaltenen Beschichtungsmitteln maximal 20 Gew.-% Lösungsmittel, bezogen auf die Menge an Wasser, vorliegt, wobei auch das gegebenenfalls in den Polyesterdispersionen oder - lösungen noch vorliegende Lösungsmittel mit in die Berechnung eingeht, in einer wäßrigen Lösung oder Dispersion A) einer organischen Polyolkomponente, wobei die Mengenverhältnisse der beiden Komponenten einem NCO/OH-Äquivalentverhältnis, bezogen auf die Isocyanatgruppen der Polyisocyanatkomponente und die Hydroxylgruppen der Polyolkomponente von 0,5:1 bis 5:1 entsprechen, und wobei die gegebenenfalls mitverwendeten Hilfsund Zusatzstoffe der wäßrigen Polyolkomponente vor der Zugabe der Polyisocyanatkomponente einverleibt werden, dadurch gekennzeichnet, daß die in A) vorliegende Polyolkomponente zu 100 Gew.-% aus mindestens einem Carboxylat- und Hydroxylgruppen aufweisenden, mit Vinylmonomeren gepfropften Polyesterharz besteht. welches ein Molekulargewicht Mn von 1500 bis 50.000, eine Hydroxylzahl von 20 bis 300 mg KOH/g Substanz und eine Säurezahl von 10 bis 80 mg KOH/g Substanz aufweist, wobei 25 bis 100 % der diese Säurezahl bewirkenden Carboxylgruppen in der Carboxylatform vorliegen, und das Umsetzungsprodukt aus
I. 99 bis 2 Gew.-% einer Monomermischung aus:
   1. 1 bis 10 Gew.-% α,β-ungesättigter Mono- oder Dicarbonsäuren mit 3 bis 16 C-Atomen,
   2. 0 bis 70 Gew.-% hydroxyfunktioneller Alkylether der (Meth)-acrylsäure mit gegebenenfalls Ethergruppen aufweisenden Hydroxyalkylresten mit 2 bis 12 Kohlenstoffatomen.
   3. 0 bis 98 Gew.-% (Meth )acrvlsäure(cyclo)alkylester mit 1 bis 20 C-Atomen im Alkylrest und
   4. 0 bis 80 Gew.-% anderer copolymerisierbarer Verbindungen,
   wobei sich die zu 1. bis 4. gemachten Prozentangaben zu 100% ergänzen und
II. 1 bis 98 Gew.-% eines Polyesterpolyols mit einer Hydroxylzahl von 10 bis 500 mg KOH/g Substanz, einer Säurezahl von < 30 mg KOH/g Substanz und einem Gehalt an Doppelbindungen (berechnet als C=C, Molekulargewicht = 24) von 0 bis 15%
wobei sich die zu I. und II. gemachten Prozentangaben zu 100% ergänzen, darstellt.

Gegenstand der Erfindung ist schließlich auch die Verwendung der erfindungsgemäßen Bindemittelkombinationen als Bindemittel für Lacke, Beschichtungs- oder Dichtmassen.

Bei der Komponente A) handelt es sich um eine wäßrige Lösung oder Dispersion, einer Polyolkomponente. Die wäßrige Lösung oder Dispersion weist einen vorzugsweise Wassergehatt von 35 bis 85, besonders bevorzugt 45 bis 75 Gew.-%, eine Viskosität bei 23°C von 10 bis 30 000, vorzugsweise 50 bis 10 000 mPa.s und einen pH-Wert von 5 bis 10, vorzugsweise von 6 bis 9, auf.

Die in der wäßrigen Lösung oder Dispersion gelöst und/oder dispergiert vorliegende Polyolkomponente besteht zu mindestens 51 Gew.-%, vorzugsweise zumindest zu 80 Gew.-% und besonders bevorzugt zu 100 Gew.-% aus mindestens einem mit Vinylmonomeren gepfropften Polyesterharz, welches vorzugsweise ein nach der Gelpermeationschromatographie unter Verwendung von geeichtem Polystyrol als Standard bestimmbares Molekulargewicht Mn (Zahlenmittel) von 1500 bis 50 000, insbesondere 3000 bis 25 000, eine Hydroxylzahl von 20 bis 300, vorzugsweise 45 bis 200 mg KOH/g Substanz (d.h. Festharz), eine Säurezahl (bezogen auf alle Carboxylgruppen, die dabei zu 25 bis 100, vorzugsweise zu 40 bis 100 % in Carboxylatform vorliegen) von 10 bis 80, vorzugsweise von 14 bis 45 mg KOH/g Substanz aufweist.

Außer den erfindungswesentlichen, gepfropften Polyesterharzen kann die Polyolkomponente auch noch andere wasserverdünnbare Polyhydroxylverbindungen, die in wäßriger Lösung oder Dispersion mit den erfindungswesentlichen gepfropften Polyesterharzen verträglich sind, umfassen. Beispielhaft genannt seien insbesondere wasserlösliche, gegebenenfalls Ethergruppen aufweisende, mehrwertige Alkohole des Molekulargewichtsbereichs 62 bis 1000, vorzugsweise 62 bis 400 wie z.B. Ethylenglykol, Propylenglykol, Glycerin, Trimethylolpropan, die niedermolekularen, wasserlöslichen Ethoxylierungs- und/oder Propoxylierungsprodukte dieser mehrwertigen Alkohole oder beliebige Gemische derartiger Verbindungen.

In Abhängigkeit vom Molekulargewicht der den Hauptbestandteil der Polyolkomponente bildenden, mit Vinylmonomeren gepfropften Polyesterharze, ihrem Gehalt an Carboxyl- bzw. Carboxylatgruppen sowie von der Art des eingesetzten Neutralisationsmittels und der gegebenenfalls mitverwendeten Hilfslösemittel liegen die Polyesterharze als Lösung oder als Dispersion vor, im allgemeinen sind jedoch sowohl gelöste als auch dispergierte Anteile vorhanden.

Die Herstellung der Carboxylat- und Hydroxylgruppen enthaltenden, mit Vinylmonomeren gepfropften Polyesterharze erfolgt durch die Polymerisation einer säuregruppenhaltigen Monomerenmischung I in einem Polyesterharz II.

Üblicherweise werden
I. 99 bis 2 %, bevorzugt 95 bis 10 %, besonders bevorzugt 90 bis 50 %, einer Monomerenmischung aus
   1 ) 1 - 100 %, bevorzugt 1 - 50 %, besonders bevorzugt 1 - 25 %, α,β-ungesättigter Mono- oder Dicarbonsäure mit 3 bis 16, vorzugsweise 3 bis 4 Kohlenstoffatomen,
   2) 0 - 70 %, bevorzugt 0 - 50 %, besonders bevorzugt 0 - 40 %, hydroxyfunktioneller Ester einer ungesättigten C₃-C₆-Carbonsäure, insbesondere der (Meth)acrylsäure, vorzugsweise hydroxyfunktioneller Ester der genannten Säuren, die einen, gegebenenfalls Ethergruppen aufweisenden Hydroxyalkylrest mit 2 bis 12 Kohlenstoffatomen aufweisen, insbesondere hydroxyfunktioneller Alkylester der genannten Säuren mit 2 bis 6 Kohlenstoffatomen im Hydroxyalkylrest,
   3) 0 - 98 %, bevorzugt 0 - 90 %, besonders bevorzugt 0 - 80 % (Meth)Acrylsäure(cyclo)alkylester mit 1 bis 20, vorzugsweise 1 bis 18 Kohlenstoffatomen im Alkylrest und
   4) 0 - 80 %, bevorzugt 0 - 60 %, besonders bevorzugt 0 - 40 %, anderer copolymerisierbarer Verbindungen,
   wobei sich die zu 1) bis 4) genannten Prozentangaben auf das Gewicht beziehen und zu 100 % ergänzen,
   in Gegenwart von
II. 1 - 98 %, bevorzugt 5 - 90 %, besonders bevorzugt 10 - 50 % eines Polyesterpolyols mit einer Hydroxylzahl von 10 - 500, vorzugsweise von 80 - 350 mg KOH/g Substanz und einer Säurezahl von <30, vorzugsweise <5 mg KOH/g Substanz und einem Gehalt an Doppelbindungen (berechnet als C=C, Molekulargewicht = 24) von 0 bis 15 %, vorzugsweise von 0,01 bis 10 %, besonders bevorzugt von 0,1 bis 5 %
   polymerisiert, wobei sich die zu I. und II. gemachten Prozentangaben auf das Gewicht beziehen und zu 100 % ergänzen.

Zur Herstellung der Carboxylat- und Hydroxylgruppen enthaltenden, mit Vinylmonomeren gepfropften Polyesterharzen kann als Komponente 1) jedes, mindestens eine Carboxylgruppe pro Molekül tragende, den gemachten Angaben entsprechende, ungesättigte Monomer oder ein Gemisch aus solchen Monomeren eingesetzt werden. Als Komponenten 1) werden vorzugsweise Acrylsäure und/oder Methacrylsäure eingesetzt.

Es können aber auch andere ethylenisch ungesättigte Säuren wie z.B. Ethylacrylsäure, Crotonsäure, Maleinsäure, Fumarsäure und Itaconsäure oder auch z.B. Maleinsäuremono(meth)acryloyloxiethylester, Bernsteinsäuremono(meth)acryloyloxiethylester und Phthalsäuremono(meth)acryloyloxiethylester eingesetzt werden.

Als Komponente 2) können alle copolymerisierbaren ethylenisch ungesättigten Monomere, die mindestens eine Hydroxylgruppe pro Molekül tragen oder ein Gemisch aus solchen Monomeren eingesetzt werden. Als Beispiele werden Hydroxyalkylester der Acrylsäure, Methacrylsäure oder einer anderen α,β-ethylenisch ungesättigten Carbonsäure genannt. Diese Ester können sich von einem Polyalkylenglykol mit insbesondere bis zu 12 Kohlenstoffatomen ableiten, das mit der Säure verestert ist, oder sie können durch Umsetzung der Säure mit einem Alkylenoxid erhalten werden. Als Beispiel für diese Ester sei das Polyethylenglykolmono(meth)acrylat mit bis zu 12 Kohlenstoffatomen im Polyethylenglykol-Rest genannt. Als Komponente 2) werden vorzugsweise Hydroxyalkyester der Acrylsäure und Methacrylsäure oder Mischungen aus diesen Hydroxyalkylestern eingesetzt. Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat und 4-Hydroxybutylmethacrylat genannt. Entsprechende Ester von anderen ungesättigten Säuren, wie z.B. Ethacrylsäure, Crotonsäure und ähnliche Säuren mit bis zu etwa 6 Kohlenstoffatomen pro Molekül, können prinzipiell auch eingesetzt werden. Die bevorzugten Monomeren der Gruppe 2) weisen 5 bis 20 Kohlenstoffatome pro Molekül auf. Besonders bevorzugt handelt es sich um Hydroxyalkylester der genannten Säuren mit 2 bis 6 Kohlenstoffatomen im Hydroxyalkylrest.

Als Komponente 3) kann jeder copolymerisierbare (Cyclo)alkylester der (Meth)acrylsäure mit 1 bis 20 Kohlenstoffatomen im (Cyclo)alkylrest oder ein Gemisch aus solchen (Meth)acrylsäureestern eingesetzt werden. In Betracht kommen insbesondere Alkylacrylate oder -methacrylate mit 1 bis 18 Kohlenstoffatomen im Alkylrest. Als Beispiele seien Methyl-, Ethyl-, n-Propyl-, n-Butyl-, n-Hexyl-, 2-Ethylhexyl-, n-Stearyl- und n-Laurylacrylat und -methacrylat oder auch cycloaliphatische (Meth)acrylsäureester, wie z.B. Cyclohexyl(meth)acrylat, genannt.

Als Komponente 4) können alle mit 1, 2 und 3 copolymerisierbaren, auch mehrfach ethylenisch ungesättigten Verbindungen, oder ein Gemisch aus solchen Verbindungen, eingesetzt werden. Beispiele hierfür sind Styrol, α-Alkylstyrol, Vinyltoluol, Vinylpyrrolidon, Vinylether, Vinylester, Divinylbenzol, Di(meth)acrylsäureester von Diolen, wie z.B. Ethandiol, 1,3-Propandiol und 1,4-Butandiol. Grundsätzlich können jeweils beliebige Gemische der beispielhaft unter 1) bis 4) genannten Monomeren eingesetzt werden.

Die als Komponente II eingesetzten Polyesterpolyole werden durch eine an sich bekannte Polykondensation von
a₁) 0 bis 60 Gew.-% einer aliphatischen gesättigten oder aromatischen Monocarbonsäure,
a₂) 10 bis 65 Gew.-% an aliphatisch gesättigten oder aromatischen Di-, Tri-und/oder Tetracarbonsäure und/oder an einer entsprechenden Menge an Anhydriden derartiger Säuren,
a₃) 15 bis 70 Gew.-% an di- und/oder höherfunktionellen Alkoholen,
a₄) 0 bis 30 Gew.-% einwertigen Alkoholen,
a₅) insgesamt 0 bis 25 Gew.-% an Hydroxycarbonsäuren, Lactonen, Aminoalkoholen und/oder Aminocarbonsäuren und
a₆) 0 bis 60 Gew.-% an (cyclo)aliphatischen, olefinisch ungesättigten Mono- oder Dicarbonsäuren
hergestellt, wobei sich die zu a₁) bis a₆) gemachten Prozentangaben zu 100 % ergänzen, und wobei die Umsetzung gegebenenfalls unter Zuhilfenahme von üblichen Veresterungskatalysatoren, vorzugsweise nach dem Prinzip einer Schmelz- oder Azeotropkondensation bei Temperaturen von 140 bis 240°C unter Wasserabspaltung erfolgt.

Bei der Ausgangskomponente a₁) handelt es sich um eine Monocarbonsäurekomponente, die zumindest aus einer Monocarbonsäure des Molekulargewichtsbereichs von 112 bis 340 besteht. Geeignete Monocarbonsäuren sind z.B. Benzoesäure, tert.-Butylbenzoesäure, Hexahydrobenzoesäure, gesättigte Fettsäuren, wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure sowie Gemische dieser oder anderer Monocarbonsäuren.

Bei der Ausgangskomponente a₂) handelt es sich um Di-, Tri- und/oder Tetracarbonsäuren bzw. deren Anhydride des Molekulargewichtsbereichs 98 bis 600. Geeignet sind z.B. Phthalsäure(anhydrid), Isophthalsäure, Terephthalsäure, Hexahydrophthalsäure(anhydrid), Bemsteinsäure(anhydrid), Adipinsäure, Sebacinsäure, Azelainsäure, Dimerfettsäuren, Trimerfettsäure, Trimellithsäure(anhydrid), Pyromellithsäure(anhydrid) und Gemische dieser oder anderer Säuren.

Bei der Ausgangskomponente a₃) handelt es sich um Diole, Triole, Tetraole bzw. höherwertige Alkoholkomponenten des Molekulargewichtsbereichs 62 bis 400. Geeignet sind z.B. Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Trimethylpropan, Glycerin, Pentaerythrit, Trimethylpentandiol, Dipentaerythrit und Gemische dieser oder anderer mehrwertiger Alkohole.

Bei der Ausgangskomponente a₄) handelt es sich um Monoalkohole des Molekulargewichtsbereichs 100 bis 290 wie z.B. n-Hexanol, Cyclohexanol, Decanol, Dodecanol, Tetradecanol, Octanol, Octadecanol, natürliche Fettalkoholgemische, wie z.B. ®Ocenol 110/130 (Fa. Henkel) und Gemische dieser oder anderer Alkohole.

Bei der Ausgangskomponente a₅) handelt es sich um Hydroxycarbonsäuren mit 2 bis 10 Kohlenstoffatomen, Lactone derartiger Säuren, Aminoalkohole des Molekulargewichtsbereichs 61 bis 300 und/oder Aminocarbonsäuren des Molekulargewichtsbereichs 75 bis 400 wie z.B. Diethylolpropionsäure, Milchsäure, Äpfelsäure, Weinsäure, ε-Caprolacton, Aminoethanol, Aminopropanol, Diethanolamin, Aminoessigsäure, Aminohexansäure.

Bei der Ausgangskomponente a₆) handelt es sich um (cyclo)aliphatische Mono- oder Dicarbonsäuren, die mindestens eine Doppelbindung enthalten wie z.B. (Meth)acrylsäure, Maleinsäure(anhydrid), Fumarsäure, Crotonsäure, Tetrahydrophthalsäure(anhydrid), ungesättigte Fettsäuren, wie z.B. Sojaölfettsäure, Tallölfettsäure, Safflorölfettsäure sowie Gemische dieser oder anderer ungesättigter Mono- oder Dicarbonsäuren.

Bevorzugte Polyesterpolyole II enthalten
a₁) 0 bis 55 Gew.-% Monocarbonsäuren der obengenannten Art, vorzugsweise mit 7 bis 20 Kohlenstoffatomen wie beispielsweise Benzoesäure. 2-Ethylhexansäure, Isononansäure, hydrierte technische Fettsäuren bzw. deren Gemische (wie z.B. ®Prifrac 2950, ®Prifrac 2960, ®Prifrac 2980 von Unichema International), Stearinsäure und/oder Palmitinsäure,
a₂) 15 bis 56 Gew.-% Di- und/oder Tricarbonsäuren der obengenannten Art bzw. deren Anhydride wie beispielsweise Phthalsäureanhydrid, Hexahydrophthalsäureanhydrid, Isophthalsäure, Terephthalsäure, Adipinsäure, Benzoltricarbonsäure und/oder Dimerfettsäure,
a₃) 25 bis 63 Gew.-% di- und/oder höherfunktionelle Alkohole der obengenannten Art wie z.B. Ethylenglykol, 1,2-Propylenglykol, 1,6-Hexandiol, 1,4-Cyclohexandimethanol, Neopentylglykol, Trimethylolpropan, Glycerin und/oder Pentaerythrit, sowie
a₆) 0,01 bis 30 Gew.-% Mono- oder Dicarbonsäuren, die mindestens eine Doppelbindung enthalten der obengenannten Art wie z.B. (Meth)acrylsäure, Maleinsäure(anhydrid), Fumarsäure, Tetrahydrophthalsäure(anhydrid), Crotonsäure und natürliche und synthetische, ungesättigte Fettsäuren.

Im Falle einer azeotropen Veresterung wird das Schleppmittel, üblicherweise Isooctan, Xylol, Toluol oder Cyclohexan nach beendeter Reaktion im Vakuum destilliert.

Die Polyesterpolyole II bestehen bevorzugt aus Polykondensationsprodukten der beispielhaft genannten Ausgangskomponenten mit den obengenannten Kenndaten. Zur Einstellung bestimmter Eigenschaften besteht jedoch auch die Möglichkeit, die Polyesterpolyole vor der Pfropfreaktion einer Modifizierungsreaktion, beispielsweise durch Umsetzung mit Mono- oder Polyisocyanaten unter Einbau von Urethangruppen zu modifizieren. Diese Modifizierung kann auch in Gegenwart von niedermolekularen Hydroxy-, Carboxy- oder aminofunktionellen Substanzen erfolgen, die dann unter Kettenverlängerung in das Polymer eingebaut werden. Geeignete niedermolekulare Substanzen sind beispielsweise 1,6-Hexandiol, Neopentylglykol, Stearylalkohol, Dimethylolpropionsäure, 6-Aminohexansäure, Aminoethanol, 1,4-Cyclohexandimethanol.

Geeignete Monoisocyanate sind z.B. Phenylisocyanat und Stearylisocyanat Geeignete Polyisocyanate sind z.B. Hexamethylendiisocyanat, Isophorondiisocyanat, Toluylendiisocyanat und höherfunktionelle, Uretdion-, Urethan-, Hamstoff-, Biuret - und/oder Isocyanuratgruppen tragende Isocyanate. Im Rahmen der Erfindung soll der Begriff "Polyesterharze", wie er zur Benennung der Pfropfgrundlage benutzt wird, nicht nur die einfachen Polykondensationsprodukte sondern auch die Urethangruppen aufweisenden Modifizierungsprodukte der Polykondensationsprodukte umfassen.

Zur Herstellung der gepfropften Polyesterharze kann beispielsweise wie folgt vorgegangen werden: Die Komponenten 1) bis 4) werden zusammen, teilweise gemischt oder getrennt zu der Komponente II, die gegebenenfalls mit einem geeigneten Lösemittel gemischt ist, zudosiert und dort in Gegenwart mindestens eines Polymerisationsinitiators polymerisiert. Zur Erzielung besonderer Eigenschaften können ein oder auch mehrere Monomere schneller, langsamer, später beginnend und/oder früher oder später endend als die üblichen Monomere zugegeben werden.

Als organische Lösemittel werden die für die Herstellung von Polyacrylatharzen üblichen und für die Herstellung von wäßrigen Dispersionen geeigneten Lösemittel eingesetzt. Als Beispiele für brauchbare Lösemittel seien Butylglykol, 2-Methoxypropanol, n-Butanol, Methoxybutanol, n-Propanol, Ethylenglykolmonomethylether, Ethylenglykolmonoethylether, Ethlenglykolmonobutylether, Diethylenglykolmonomethylether, Diethylenglykolmonoethylether, Diethylenglykoldiethylether, Diethylenglykolmonobutylether und 3-Methyl-3-methoxybutanol oder deren Gemische genannt.

Es können auch nicht wassermischbare Lösemittel, deren Siedepunkt <100°C ist oder die mit Wasser ein heterogenes Azeotrop bilden wie z.B. 2-Butanon, Toluol, Xylol, Butylacetat, Solvent Naphtha, Methylisobutylketon oder Gemische daraus verwendet werden.

Die verwendeten organischen Lösemittel können vor, während oder nach dem Dispergierschritt ganz oder teilweise, gegebenenfalls azeotrop und/oder durch Anlegen eines Vakuums bzw. eines verstärkten Inertgasstromes aus dem Reaktionsgemisch entfernt werden.

Als Polymerisationsinitiatoren werden ebenfalls die an sich bekannten Verbindungen eingesetzt. Beispielsweise geeignet sind freie Radikale bildende Peroxide, wie z.B. Benzoylperoxid, tert.-Butylperbenzoat, tert-Butylper-2-ethylhexanoat, Di-tert.-butylperoxid oder Azoinitiatoren, wie z.B. Azobisisobutyronitril oder Mischungen daraus genannt.

Die Polymerisation wird bei Temperaturen von 60 - 180°C, vorzugsweise bei 110 bis 160°C durchgeführt.

Zur Erzielung des gewünschten Molekulargewichtes können Regler wie z.B. Dodecylmercaptan oder Mercaptoethanol in Mengen von 0,01 bis 6 % mitverwendet werden.

Während der Polymerisationsreaktion in Gegenwart der Polyesterharze erfolgt eine zumindest teilweise Verknüpfung der Polyesterharze mit dem sich bildenden Polymerisat im Sinne einer Pfropfcopolymerisation. Daneben sind auch Verknüpfungen durch Copolymerisation (im Falle der Verwendung von olefinisch ungesättigten Polyesterharzen) und/oder im Sinne einer Kondensationsreaktion über Carboxyl-bzw. Hydroxylgruppen denkbar. Die resultierenden Umsetzungsprodukte werden der Einfachheit halber im Rahmen der Erfindung als "mit Vinylmonomeren gepfropfte Polyesterharze" bzw. als "Pfropfcopolymerisate" bezeichnet.

Die in den Pfropfcopolymerisaten vorliegenden freien Carboxylgruppen werden vor oder während des folgenden Dispergierschrittes durch Zugabe von mindestens einer Base zu 25 bis 100, vorzugsweise zu 40 bis 100 % in Carboxylatgruppen überführt. Geeignete Basen sind beispielsweise Ammoniak, N-Methylmorpholin, Triethylamin, Dimethylethanolamin, Methyldiethanolamin, Triethanolamin, Morpholin, Tripropylamin, Ethanolamin, Triisopropylamin, 2-Amino-2-methyl-1-propanol bzw. Gemische dieser und anderer Neutralisationsmittel. Ebenfalls geeignet, jedoch weniger bevorzugt als Neutralisationsmittel sind Natriumhydroxid, Lithiumhydroxid und Kaliumhydroxid. Bevorzugte Neutralisationsmittel sind Ammoniak und Dimethylethanolamin.

Im Dispergierschritt (unter "Dispergierschritt" ist die Überführung der Pfropfcopolymerisate in eine wäßrige Lösung und/oder Dispersion zu verstehen. Im allgemeinen enthalten diese wäßrigen Systeme sowohl gelöste als auch dispergierte Anteile) kann alternativ das Wasser/Neutralisationsmittelgemisch zum Harz, das Wasser zum Harz-/Neutralisationsmittelgemisch, das Harz zum Wasser/Neutralisationsmittelgemisch oder das Harz/Neutralisationsmittelgemisch zum Wasser gegeben werden. Die Dispergierbarkeit der Harze in Wasser kann gewünschtenfalls durch Mitverwenden von externen ionischen oder nichtionischen Emulgatoren wie z.B. ethoxyliertes Nonylphenol beim Dispergieren verbessert werden.

Der Dispergierschritt wird üblicherweise bei 40 bis 120°C durchgeführt. Die Carboxylat- und Hydroxylgruppen enthaltenden wäßrigen Bindemittelkomponenten A) weisen Festkörpergehalte (= Gehalt an gelösten und/oder dispergierten, mit Vinylmonomeren gepfropften Polyesterharzen) von 25 bis 65, vorzugsweise von 30 bis 55 Gew.-% auf. Der Anteil an organischen Lösemitteln beträgt <8, vorzugsweise <6 und ganz besonders bevorzugt <2,5 Gew.-%.

Die nach dem Dispergierschritt vorliegende wäßrige Lösung oder Dispersion der Pfropfcopolymerisate kann als solche als Komponente A) der erfindungsgemäßen Bindemittelkombinationen Verwendung finden. Den oben bereits gemachten Ausführungen entsprechend, ist es jedoch auch möglich, die Dispersion mit anderen organischen Polyhydroxylverbindungen, insbesondere mit wasserlöslichen mehrwertigen Alkoholen der oben beispielhaft genannten Art abzumischen, wobei jedoch die oben gemachten Angaben bezüglich der Mengenverhältnisse beachtet werden sollten. Wie bereits oben ausgeführt besteht die in der Komponente A) gelöst und/oder dispergiert vorliegende Polyolkomponente zumindest zu 51 Gew.-%, vorzugsweise zumindest zu 80 Gew.-% und besonders bevorzugt zu 100 % aus Pfropfcopolymerisaten der genannten Art.

Bei der Polyisocyanatkomponente B) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente B) weist bei 23°C im allgemeinen eine Viskosität von 50 bis 10 000, vorzugsweise von 50 bis 1000 mPa.s auf. Besonders bevorzugt handelt es sich bei der Polyisocyanatkomponente B) um Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23°C von 50 bis 500 mPa.s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, daß in den letztendlich erhaltenen erfindungsgemäßen Beschichtungsmitteln maximal 20 Gew.-% Lösungsmittel, bezogen auf die Menge an Wasser vorliegt, wobei auch das gegebenenfalls in den Polyesterdispersionen oder -lösungen noch vorliegende Lösungsmittel mit in die Berechnung eingeht.

Als Zusatzmittel für die Polyisocyanate geeignete Lösungsmittel sind beispielsweise aromatische Kohlenwasserstoffe, wie beispielsweise "Solventnaphtha" oder auch Lösungsmittel der bereits oben beispielhaft genannten Art.

Sehr gut geeignet sind beispielsweise "Lackpolyisocyanate" auf Basis von Hexamethylendiisocyanat oder von 1-lsocyanato-3,3,5-trimethyl-5-isocyanatomethylcyclohexan (IPDI) und/oder Bis(isocyanatohexyl)methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N',N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N',N"-Tris-(6-isocyanatohexyl)-isocyanurat im Gemisch mit untergeordneten Mengen an seinen höheren Homologen bestehen.

Insbesondere bevorzugt werden den genannten Kriterien entsprechende Gemische aus Uretdion- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von 50 bis 500 mPa.s und einer zwischen 2,2 und 5,0 liegenden NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung vorzugsweise destillativ von überschüssigen monomeren Diisocyanaten befreit worden sind.

Es können auch hydrophilierte Lackpolyisocyanate wie z.B. mit Polyethylenoxid oder mit neutralisierten Säuregruppen hydrophilierte Polyisocyanate als Vernetzungskomponente eingesetzt werden.

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen. Die Polyisocyanatkomponente B) kann im übrigen aus beliebigen Gemischen der beispielhaft genannten Polyisocyanate bestehen.

Zur Herstellung der wäßrigen Bindemittelkombinationen wird die Polyisocyanatkomponente B) in der wäßrigen Bindemittelkomponente A) emulgiert, wobei das gelöste bzw. dispergierte, modifizierte Polyesterharz gleichzeitig die Funktion eines Emulgators für das zugesetzte Polyisocyanat übernimmt, jedoch kann diese Funktion auch durch Mitverwendung von externen Emulgatoren unterstützt werden.

Die Durchführung kann durch einfaches Verrühren bei Raumtemperatur erfolgen. Die Menge der Polyisocyanatkomponente wird dabei so bemessen, daß ein NCO/OH-Äquivalentverhältnis, bezogen auf die Isocyanatgruppen der Komponente B) und die alkoholischen Hydroxylgruppen der Komponente A) von 0,5:1 bis 5:1, vorzugsweise 0,8:1 bis 2:1 resultiert.

Vor der Zugabe der Polyisocyanatkomponente B) können der Komponente A), d.h. der wäßrigen Lösung oder Dispersion der Polyolkomponente, gewünschtenfalls die üblichen Hilfs- und Zusatzmittel der Lacktechnologie einverleibt werden. Hierzu gehören beispielsweise Entschäumungsmittel, Verdickungsmittel, Verlaufshilfsmittel, Pigmente, Dispergierhilfsmittel für die Pigmentverteilung u.dgl.

Die Herstellung von Beschichtungsmitteln, die als Bindemittel erfindungsgemäße wäßrige Bindemittelkombinationen enthalten, erfolgt somit vorzugsweise in einem mehrstufigen Verfahren, wobei man
in einem ersten Reaktionsschritt ein Carboxylat- und Hydroxylgruppen aufweisendes Pfropfcopolymerisat der beispielhaft genannten Art auf die geschilderte Weise herstellt,
in einem Zweiten Reaktionsschritt das so erhaltene Pfropfcopolymerisat in Wasser löst und/oder dispergiert, gegebenenfalls die so erhaltene wäßrige Lösung oder Dispersion mit weiteren wasserverdünnbaren Polyhydroxylverbindungen der beispielhaft genannten Art und/oder den üblichen Hilfs- und Zusatzmitteln der Lacktechnologie vermischt und anschließend
in einem dritten Reaktionsschritt die Polyisocyanatkomponente B) in der vorliegenden wäßrigen Lösung bzw. Dispersion emulgiert.

Die erfindungsgemäßen Beschichtungsmittel eignen sich für alle Einsatzgebiete, in denen lösungsmittelhaltige, lösemittelfreie oder andersartige wäßrige Anstrich- und Beschichtungssysteme mit einem erhöhten Eigenschaftsprofil Verwendung finden, z.B.: Beschichtung praktisch aller mineralischen Baustoff-Oberflächen wie Kalk- und/oder Zement gebundener Putze, Gips enthaltende Oberflächen, Faser-Zement-Baustoffe, Beton; Lackierung und Versiegelung von Holz und Holzwerkstoffen wie Spanplatten, Holzfaserplatten sowie Papier; Lackierung und Beschichtung metallischer Oberflächen; Beschichtung und Lackierung asphalt- oder bitumenhaltiger Straßenbeläge; Lackierung und Versiegelung diverser Kunststoffoberflächen; außerdem sind sie zur flächigen Verklebung diverser Werkstoffe geeigner, wobei gleichartige und unterschiedliche Werkstoffe miteinander verbunden werden. Die erfindungsgemäßen Beschichtungsmittel können dabei sowohl als Grundierung-, Füller- und auch als Decklackbindemittel eingesetzt werden.

Die Trocknung der Lackfilme kann sowohl bei Raumtemperatur als auch bei erhöhter Temperatur, wie z.B. bei 80°C oder bei Einbrennbedingungen bei bis zu 260°C erfolgen.

In den nachfolgenden Beispielen beziehen sich alle Prozentangaben, falls nicht anders angegeben, auf Gewichtsprozente.

### Beispiele

### Ausgangsmaterialien:

### Herstellung der Polyestervorstufen al) bis alV)

al) In ein 6-1-Reaktionsgefäß mit Rühr-, Kühl- und Heizvorrichtung und Wasserabscheider werden 1312 g Hexahydrophthalsäureanhydrid, 144 g Tetrahydrophthalsäureanhydrid, 1703 g Trimethylolpropan und 1812 g eines gesättigten C₁₄/C₁₆-Fettsäuregemisches (®Prifrac 2950, Unichema International) eingewogen und unter Durchleiten von Stickstoff in einer Stunde auf 140°C aufgeheizt. Dann wird in 8 Stunden auf 220°C aufgeheizt. Es wird so lange unter Wasserabspaltung kondensiert, bis der Polyester al) eine Gesamtsäurezahl von 3,0 und eine OH-Zahl von 137 aufweist.
all) In ein 6-1-Reaktionsgefäß mit Rühr-, Kühl- und Heizvorrichtung und Wasserabscheider werden 771,8 g Trimethylolpropan, 476,1 g Phthalsäureanhydrid, 63,3 g Maleinsäureanhydrid, 939,3 g Adipinsäure, 759,0 g 1,6-Hexandiol und 669,2 g Neopentylglykol eingewogen und unter Durchleiten von Stickstoff in einer Stunde auf 140°C aufgeheizt. Dann wird in 6 Stunden auf 200°C aufgeheizt und so lange unter Wasserabspaliung kondensiert, bis die Säurezahl unter 12 mg KOH/g Substanz gesunken ist. Dann werden 321,4 g ®Prifrac 2950 (Unichema International) zugegeben und so lange bei 200°C unter Wasserabspaltung kondensiert, bis der Polyester all) eine Gesamtsäurezahl von 2,0 und eine OH-Zahl von 298 aufweist.
alll) In ein 6-1-Reaktionsgefäß mit Rühr-, Kühl- und Heizvorrichtung und Wasserabscheider werden 402 g Trimethylolpropan, 1416 g 1,6-Hexandiol, 1110 g Phthalsäureanhydrid, 147 g Maleinsäureanhydrid und 438 g Adipinsäure eingewogen und unter Durchleiten von Stickstoff in einer Stunde auf 140°C aufgeheizt Dann wird in 8 Stunden auf 220°C aufgeheizt und so lange unter Wasserabspaltung kondensiert, bis der Polyester alll) eine Gesamtsäurezahl von 6,5 und eine OH-Zahl von 111 aufweist.
alV) In ein 4-1-Reaktionsgefäß mit Rühr-, Kühl- und Heizvorrichtung und Wasserabscheider werden 831,6 g Hexahydrophthalsäureanhydrid, 58,8 g Maleinsäureanhydrid, 1206,0 g Trimethylolpropan und 1150,8 g ®Prifrac 2950 (Unichema International) eingewogen und unter Durchleiten von Stickstoff innerhalb einer Stunde auf 140°C aufgeheizt Dann wird in 8 Stunden auf 220°C aufgeheizt und so lange unter Wasserabspaltung kondensiert, bis der Polyester alV) eine Gesamtsäurezahl von 5,0 und eine OH-Zahl von 129 aufweist.

### Herstellung der wäßrigen Bindemittelkomponente A

A₁ In einem 2-1-Reaktionsgefäß mit Rühr-, Kühl- und Heizvorrichtung werden 166,7 g Polyestervorstufe al) vorgelegt und auf 135°C aufgeheizt. Zu dem Polyester wird innerhalb von 3 Stunden eine Mischung aus 225,0 g n-Butylacrylat, 25,0 g Methacrylsäure, 50,0 g Styrol, 100,0 g Hydroxyethylmethacrylat, 100,0 g Methylmethacrylat und 5,0 g n-Dodecylmercaptan zudosiert. Parallel zu der Monomerenmischung werden 35,7 g tert.-Butylper-2-ethylhexanoat (70 %ig in Kohlenwasserstoffgemisch) innerhalb von 4 Stunden zugegeben. Nach dem Ende der Peroxidzugabe wird 2 Stunden bei 135°C nachgerührt, das gepfropfte Polyesterharz mit 17,7 g Dimethylethanolamin neutralisiert und mit 1045,0 g Wasser dispergiert. Durch Zugabe von Wasser wird ein Festgehalt von ca. 33,4 % eingestellt.
   Das mit Vinylmonomeren gepfropfte Polyesterharz A₁ hat eine OH-Zahl von ca. 103 und eine Säurezahl von ca. 26 mg KOH/g Festharz. Der Neutralisationsgrad beträgt ca 61 %.
A₂ In eine 2-1-Reaktionsgefäß mit Rühr-, Kühl- und Heizvorrichtung werden 166,7 g Polyestervorstufe alV) und 36,7 g Xylol vorgelegt und auf 135°C aufgeheizt. Zu der Polyesterlösung wird innerhalb von 3 Stunden eine Mischung aus 225,0 g n-Butylacrylat, 25,0 g Methacrylsäure, 50,0 g Styrol, 100,0 g Hydroxyethylmethacrylat, 100,0 g Methylmethacrylat und 5,0 g n-Dodecylmercaptan zudosiert. Parallel dazu werden 35,7 g tert.-Butylper-2-ethylhexanoat (70 %ig in Kohlenwasserstoffgemisch) innerhalb von 4 Stunden zugegeben. Nach dem Ende der Peroxidzugabe wird 2 Stunden bei 135°C nachgerührt. Das gepfropfte Polyesterharz A₁ wird mit 17,7 g Dimethylethanolamin neutralisiert und mit 1045 g Wasser dispergiert. Nach dem azeotropen Abdestillieren des Lösemittels wird durch Zugabe von Wasser ein Festgehalt von ca. 34,1 % eingestellt.
   Das mit Vinylmonomeren gepfropfte Polyesterharz A₂ hat eine OH-Zahl von ca. 101 und eine Säurezahl von ca. 27 mg KOH/g Festharz. Der Neutralisationsgrad beträgt ca. 59 %.
A₃ In einem 2-1-Reaktionsgefäß mit Rühr-, Kühl- und Heizvorrichtung werden 166,7 g der Polyestervorstufe all) und 36,7 g Butylglykol eingewogen und auf 125°C aufgeheizt. Zu der Polyesterlösung wird innerhalb von 2 Stunden eine Mischung aus 74,0 g n-Butylacrylat, 33,3 g Styrol, 100,0 g Hydroxyethylmethacrylat 108,3 g Methylmethacrylat und 3,3 g n-Dodecylmercaptan zudosiert. Im Anschluß daran wird innerhalb von 1 Stunde eine Mischung aus 37,0 g n-Butylacrylat, 16,7 g Styrol, 50,0 g Hydroxyethylmethacrylat, 54,2 g Methylmethacrylat, 12,5 g Methacrylsäure, 14,0 g Acrylsäure und 1,7 g n-Dodecylmercaptan zudosiert. Parallel zu den Monomeren werden innerhalb von 4 Stunden 35,7 g tert.-Butylper-2-ethylhexanoat (70 %ig in Kohlenwasserstoffgemisch) zugegeben. Nach dem Ende der Peroxidzugabe wird 2 Stunden bei 125°C nachgerührt Das gepfropfte Polyesterharz wird mit 19,9 g Dimethylethanolamin neutralisiert und in 882 g Wasser dispergiert.
   Durch Zugabe von Wasser wird ein Festgehalt von ca. 39,8 % eingestellt. Das mit Vinylmonomeren gepfropfte Polyesterharz A₃ hat eine OH-Zahl von ca. 175 und eine Säurezahl von ca. 35 mg KOH/g Festharz. Der Neutralisationsgrad beträgt ca. 51 %.
A₄ In einem 2-1-Reactionsgefäß mit Rühr-, Kühl- und Heizvorrichtung werden 166,7 g der Polyestervorstufe all) und 36,7 g Butylglykol eingewogen und auf 125°C aufgeheizt. Zu der Polyesterlösung wird innerhalb von 2 Stunden eine Mischung aus 83,3 g n-Butylacrylat, 100,0 g Hydroxyethylmethacrylat, 141,7 g Methylmethacrylat und 3,3 g n-Dodecylmercaptan zudosiert. Im Anschluß daran wird eine Mischung aus 41,7 g n-Butylacrylat, 50,0 g Hydroxyethylmethacrylat, 70,8 g Methylmethacrylat, 12,5 g Methacrylsäure und 1,7 g n-Dodecylmercaptan innerhalb 1 Stunde zugegeben. Beginnend mit der Monomerenzugabe werden parallel dazu 17,9 g tert.-Butylper-2-ethylhexanoat (70 %ig in Kohlenwasserstoffgemisch) innerhalb von 4 Stunden zudosiert. Nach dem Ende der Peroxidzugabe wird noch 2 Stunden bei 125°C nachgerührt. Das gepfropfte Polyesterharz wird mit 19,6 g Dimethylethanolamin neutralisiert und mit 780 g Wasser dispergiert. Durch Wasserzugabe wird ein Festgehalt von ca. 43,2 % eingestellt.
   Das mit Vinylmonomeren gepfropfte Polyesterharz A₄ hat eine OH-Zahl von ca. 175 und eine Säurezahl von ca. 18 mg KOH/g Festharz. Der Neutralisationsgrad beträgt ca. 100%.
A₅ In einem 2-1-Reaktionsgefäß mit Rühr-, Kühl- und Heizvorrichtung werden 100,0 g der Polyestervorstufe all) und 0,2 g ®Desmorapid 50 (Bayer AG, Leverkusen) eingewogen und auf 120°C aufgeheizt. Zu der Polyestervorstufe werden 4,0 g Hexamethylendiisocyanat zugegeben und so lange bei 120°C gerührt, bis der NCO-Gehalt kleiner 0,1 % ist. Anschließend werden 22,1 g Butylglykol zugesetzt und eine Mischung aus 85,8 g n-Butylacrylat, 49,1 g Methylmethacrylat, 61,3 g Hydroxyethylmethacrylat und 2,0 g n-Dodecylmercaptan innerhalb von 2 Stunden zudosiert.
Im Anschluß daran wird eine Mischung aus 42,9 g n-Burylacrylat, 24,5 g Methylmethacrylat, 30,7 g Hydroxyethylmethacrylat, 12,3 g Acrylsäure und 1,1 g n-Dodecylmercaptan innerhalb von 1 Stunde zudosiert. Beginnend mit der Monomerenzugabe werden parallel dazu 11,0 g tert.-Butylper-2-ethylhexanoat (70 %ig in Kohlenwasserstoffgemisch) innerhalb von 4 Stunden zudosiert. Nach dem Ende der Peroxidzugabe wird noch 2 Stunden bei 120°C nachgerührt. Das gepfropfte Polyesterharz wird mit 12,0 g Dimethylethanolamin neutralisiert und mit 477 g Wasser dispergiert. Durch Wasserzugabe wird ein Festgehalt von 38,7 g eingestellt.
Das mit Vinylmonomeren gepfropfte, urethangruppenmodifizierte Polyesterharz A₅ hat eine OH-Zal von ca. 160 und eine Säurezahl von ca. 27 mg KOH/g Festharz. Der Neutralisationsgrad beträgt ca. 66 %.

### Polyisocyanate B

### Polyisocyanat B1

Gemisch aus 70 Gew.-Teilen eines Uretdiongruppen aufweisenden, also dimerisierten Hexamethylendiisocyanats mit zwei endständigen, freien NCO-Gruppen und 30 Gew.-Teilen des im wesentlichen zum N,N',N"-Tris-(6-isocyanatohexyl)-isocyanurat trimerisierten Hexamethyldiisocyanates im Gemisch mit untergeordneten Mengen an höheren Homologen beider Produkte. Polyisocyanat B1 besitzt in seiner 100 %igen, also lösemittelfreien Lieferform eine durchschnittliche Viskosität von 150 mPa.s/23°C und einen durchschnittlichen Gehalt an freien NCO-Gruppen von 22,5 %.

### Polyisocyanat B2

N,N',N"-Tris-(6-isocyanatohexyl)-biuret mit untergeordneten Mengen seiner höheren Homologen. Das 100 %ige Produkt weist einen durchschnittlichen NCO-Gehalt von 22,5 Gew.-% und eine durchschnittliche Viskosität von ca. 3000 mPa.s/23°C auf.

### Beispiel 1

100 Gew.-Teile des Produktes A₃ mit einem Festkörpergehalt von 39,8 Gew.-% und einer Hydroxylzahl von ca 175, bezogen auf das Festharz, werden mit 0,79 Gew.-Teilen einer 25 Gew.-%igen Lösung eines handelsüblichen Emulgators in Wasser (Emulgator WN, Bayer AG, Leverkusen), 1,49 Gew.-Teilen einer 20 Gew.-%igen, wäßrigen Lösung eines handelsüblichen, nichtionischen Polyurethanverdickers (®Acrysol RM 8, Rohm und Haas, Frankfurt) und 0,6 Gew.-Teilen eines handelsüblichen Entschäumers (®Bevaloid 581 B, Erbslöh, Düsseldorf) gemischt. Es entsteht eine unbegrenzt lagerstabile Hydroxykomponente für einen wäßrigen Zweikomponenten-Polyurethanlack.

Zu der oben beschriebenen Formulierung werden 35,5 Gew-Teile Polyisocyanat B1 zugesetzt und durch Rühren homogenisiert. Der somit verarbeitungsfertige Zweikomponenten-Polyurethanlack auf wäßriger Basis hat ein NCO/OH-Verhältnis von 1,5. Die Verarbeitungszeit beträgt 3 bis 4 Stunden. Filme, die in einer Naßfilmdicke von 200 µm (entspricht ca. 50 µm trocken) aufgetragen wurden, zeigten Staubtrocknung innerhalb von 2 bis 3 Stunden und Durchtrocknung (d.h. kein Abdruck bei kräftigem Daumendruck) von 4 bis 5 Stunden. Der zähelastische, ausreagierte Film hat folgende lacktechnische Eigenschaften:

| | |
|---|---|
| Optik (Glanz/Transparenz) | sehr gut |
| Pendelhärte (Albert/König) | 90 - 100" |

### Lösemittelbeständigkeit

| | |
|---|---|
| Testbenzin | sehr gut |
| Solvent Naphtha 100 | sehr gut |
| Methoxypropylacetat | sehr gut |
| Aceton | gut bis mäßig |
| Ethanol | gut |

### Beispiel 2

Die Formulierung der Hydroxykomponente entspricht in allen Details der Formulierung in Beispiel 1.

Als Härtekomponente kommen jedoch 47,5 Gew.-Teile einer 75 %igen Lösung des Polyisocyanates B2 in Methoxypropylacetat/Xylol 1:1 zur Anwendung. Das Gemisch wird durch Rühren homogenisiert. Die Verarbeitungszeit beträgt 3 bis 4 Stunden. Filme, die in einer Naßfilmschichtstärke von 200 µm aufgetragen wurden, wurden nach 30 Minuten ablüften 30 Minuten bei 120°C eingebrannt. Der ausreagierte Film hatte folgende Eigenschaften:

| | |
|---|---|
| Optik (Glanz/Transparenz) | sehr gut |
| Pendelhärte (Albert/König) | 170-180" |

### Lösemittelbeständigkeit

| | |
|---|---|
| Testbenzin | sehr gut |
| Solvent Naphtha 100 | sehr gut |
| Methoxypropylacetat | sehr gut |
| Aceton | gut bis mäßig |
| Ethanol | gut |

### Beispiel 3

100 Gew.-Teile des Produktes A₄ mit einem Festkörper von 43,2 Gew.-% und einer Hydroxylzahl von ca. 175, bezogen auf das Festharz, werden mit 0,86 Gew.-Teilen Emulgatorlösung (entsprechend Beispiel 1), 1,62 Gew.-Teilen nichtionischem Polyurethanverdicker (entsprechend Beispiel 1) und 0,6 Gew.-Teilen Entschäumer (entsprechend Beispiel 1) gemischt. Es entsteht eine unbegrenzt lagerstabile Hydroxykomponente für einen wasserverdünnbaren Zweikomponenten-Polyurethanlack.

Zu der oben beschriebenen Hydroxykomponente werden 38,4 Gew.-Teile Polyisocyanat B1 zugesetzt und durch Rühren homogenisiert.

Der beschriebene Zweikomponenten-Polyurethanlack auf wäßriger Basis hat ein NCO/OH-Verhältnis von 1,5. Die Verarbeitungszeit beträgt ca. 5 Stunden.

Filme, die in einer Naßfilmstärke von 200 µm (entspricht einer Trockenfilmstärke von ca. 50 µm) aufgetragen wurden, waren innerhalb von 2 bis 3 Stunden staubtrocken und innerhalb von 6 bis 8 Stunden drucktrocken. Der zähelastische, ausgehärtete Film (nach 2 bis 4 Wochen ist der Härtungsprozeß abgeschlossen) hat folgende lacktechnische Eigenschaften:

| | |
|---|---|
| Optik (Glanz/Transparenz) | sehr gut |
| Pendelhärte (Albert/König) | 80 - 90" |

### Lösemittelbeständigkeit

| | |
|---|---|
| Testbenzin | sehr gut |
| Solvent Naphtha 100 | sehr gut |
| Methoxypropylacetat | sehr gut |
| Aceton | mäßig |
| Ethanol | gut - mäßig |

### Beispiel 4

Die Formulierung der Polyhydroxykomponente entspricht in allen Details der Formulierung in Beispiel 3.

Als Härtekomponente kommen 51,3 Gew.-Teile einer 75 %igen Lösung des Polyisocyanates 82 in Methoxypropylacetat Xylol 1:1 zur Anwendung. Das Gemisch wird durch Rühren homogenisiert. Die Verarbeitungszeit beträgt 3 bis 4 Stunden. Filme, die in einer Naßfilmschichtslärke von 200 µm (entspricht ca. 50 µm Trockenfilmstärke) aufgetragen werden, werden nach 15 bis 30 Minuten Ablüftzeit 30 Minuten bei 120°C eingebrannt.

Die ausreagierten Filme haben folgende Eigenschaften:

| | |
|---|---|
| Optik (Glanz/Transparenz) | sehr gut |
| Pendelhärte (Albert/König) | 160 170" |

### Lösemittelbeständigkeit

| | |
|---|---|
| Testbenzin | sehr gut |
| Solvent Naphtha 100 | sehr gut |
| Methoxypropylacetat | sehr gut |
| Aceton | gut |
| Ethanol | gut |

## Patentansprüche

1. Wäßrige Bindemittelkombination zur Herstellung von Beschichtungsmitteln, bestehend aus:
A) einer wäßrigen Lösung oder Dispersion einer organischen Polyolkomponente und
B) einer Polyisocyanatkomponente einer Viskosität bei 23°C von 50 bis 10.000 mPa.s, bestehend aus mindestens einem organischen Polyisocyanat oder einer Abmischung mindestens eines organischen Polyisocyanats mit einem inerten Lösungsmittel, dessen Menge so bemessen wird, daß in den letztendlich erhaltenen Beschichtungsmitteln maximal 20 Gew.-% Lösungsmittel, bezogen auf die Menge an Wasser vorliegt, wobei auch das gegebenenfalls in den Polyesterdispersionen oder -lösungen noch vorliegende Lösungsmittel mit in die Berechnung eingeht, welche in der Komponente A) emulgiert vorliegt, wobei das NCO/OH-Äquivalentverhältnis, bezogen auf die Isocyanatgruppen der Komponente B) und die Hydroxylgruppen der in A) vorliegenden Polyolkomponente bei 0,5:1 bis 5:1 liegt,
dadurch gekenzeichnet, daß die in A) vorliegende Polyolkomponente zu 100 Gew.-% aus mindestens einem Carboxylat- und Hydroxylgruppen aufweisenden mit Vinylmonomeren gepfropften Polyesterharz besteht, welches ein Molekulargewicht Mn von 1500 bis 50.000, eine Hydroxylzahl von 20 bis 300 mg KOH/g Substanz und eine Säurezahl von 10 bis 80 mg KOH/g Substanz aufweist, wobei 25 bis 100 % der diese Säurezahl bewirkenden Carboxylgruppen in der Carboxylatform vorliegen, und das Umsetzungsprodukt aus
I. 99 bis 2 Gew.-% einer Monomermischung aus:
1. 1 bis 100 Gew.-% α,β-ungesättigter Mono- oder Dicarbonsäuren mit 3 bis 16 C-Atomen,
2. 0 bis 70 Gew.-% hydroxyfunktioneller Alkylether der (Meth)-acrylsäure mit gegebenenfalls Ethergruppen aufweisenden Hydroxyalkylresten mit 2 bis 12 Kohlenstoffatomen,
3. 0 bis 98 Gew.-% (Meth)acrylsäure(cyclo)alkylester mit 1 bis 20 C-Atomen im Alkylrest und
4. 0 bis 80 Gew.-% anderer copolymerisierbarer Verbindungen,
wobei sich die zu 1. bis 4. gemachten Prozentangaben zu 100 % ergänzen und
II. 1 bis 98 Gew.-% eines Polyesterpolyols mit einer Hydroxylzahl von 10 bis 500 mg KOH/g Substanz, einer Säurezahl von <30 mg KOH/g Substanz und einem Gehalt an Doppelbindungen (berechnet als C=C, Molekulargewicht = 24) von 0 bis 15 %,
wobei sich die zu I. und II. gemachten Prozentangaben zu 100 % ergänzen, darstellt.

2. Wäßrige Bindemittelkombination gemäß Anspruch 1, **dadurch gekennzeichnet, daß** die Komponente A) einen Wassergehalt von 35 bis 85 Gew.-% und einen pH-Wert von 5 bis 10 aufweist.

3. Wäßrige Bindemittelkombination gemäß Anspruch 1 und 2, **dadurch gekennzeichnet, daß** das in der Komponente A) gelöst oder dispergiert vorliegende, mit Vinylmonomeren gepfropfte Polyesterharz das Umsetzungsprodukt aus
I. 95-10 Gew.-% einer Monomerenmischung aus
1) 1 - 50 Gew.-% α,β-ungesättiger Mono- oder Dicarbonsäure,
2) 0 - 50 Gew.-% hydroxyfunktioneller Ester der (Meth)acrylsäure,
3) 0 - 90 Gew.-% (Meth)acrylsäurealkylester mit 1 bis 18 C-Atomen im Alkylrest und
4) 0 - 60 Gew.-% anderer copolymerisierbarer Verbindungen,
wobei sich die zu 1) bis 4) gemachten Prozentangaben zu 100 % ergänzen und
II. 5-90 Gew.-% eines Polyesterpolyols mit einer Hydroxylzahl von 80 bis 350 mg KOH/g Substanz, einer Säurezahl von <10 mg KOH/g Substanz und einem Gehalt an Doppelbindungen von 0,01 bis 10 %
darstellt,
wobei sich die zu I. und II. gemachten Prozentangaben zu 100% ergänzen.

4. Wäßrige Bindemittelkombination gemäß Anspruch 1 bis 3, **dadurch gekennzeichnet, daß** das die Pfropfgrundlage des gepfropften Polyesterharzes darstellende Polyesterpolyol das Umsetzungsprodukt von
a₁) 0 bis 60 Gew.-% Monocarbonsäuren mit 6 bis 22 Kohlenstoffatomen,
a₂) 10 bis 65 Gew.-% Di-, Tri- und/oder Tetracarbonsäuren bzw. deren Anhydriden,
a₃) 15 bis 70 Gew.-% di- und/oder höherfunktionellen Alkoholen,
a₄) 0 bis 30 Gew.-% Monoalkoholen,
a₅) 0 bis 25 Gew.-% Hydroxycarbonsäuren, Lactone, Aminoalkohole und/oder Aminocarbonsäuren und
a₆) 0 bis 60 Gew.-% (cyclo)aliphatischer, ungesättigter Mono- oder Dicarbonsäuren
darstellt, wobei sich die zu a₁) bis a₆) gemachten Prozentangaben zu 100 % ergänzen.

5. Wäßrige Bindemittelkombination gemäß Anspruch 1 bis 4, **dadurch gekennzeichnet, daß** es sich bei dem die Pfropfgrundlage bildenden Polyesterharz um ein Urethangruppen-modifiziertes Polyesterpolyol handelt.

6. Wäßrige Bindemittelkombination gemäß Anspruch 1 bis 5, **dadurch gekennzeichnet, daß** das mit Vinylmonomeren gepfropfte Polyesterharz der Komponente A) ein Molekulargewicht Mn von 3000 bis 25 000, eine Hydroxylzahl von 45 bis 200 mg KOH/g Substanz und eine Säurezahl von 14 bis 45 mg KOH/g Substanz aufweist, wobei 40 bis 100 % der diese Säurezahl bewirkenden Carboxylgruppen in der Carboxylatform vorliegen.

7. Verfahren zur Herstellung von Beschichtungsmitteln gemäß Anspruch 1, die aus einer wäßrigen Bindemittelkombination und gegebenenfalls aus der Lacktechnologie bekannten Hilfs- und Zusatzmitteln bestehen, durch Emulgieren einer Polyisocyanatkomponente B) einer Viskosität bei 23°C von 50 bis 10.000mPa.s, bestehend aus mindestens einem organischen Polyisocyanat oder einer Abmischung mindestens eines organischen Polyisocyanats mit einem inerten Lösungsmittel dessen Menge so bemessen wird, daß in den letztendlich erhaltenen erfindungsgemäßen Beschichtungsmitteln maximal 20 Gew.-% Lösungsmittel, bezogen auf die Menge an Wasser vorliegt, wobei auch das gegebenenfalls in den Polyesterdispersionen oder -lösungen noch vorliegende Lösungsmittel mit in die Berechnung eingeht, in einer wäßrigen Lösung oder Dispersion A) einer organischen Polyolkomponente, wobei die Mengenverhältnisse der beiden Komponenten einem NCO/OH-Äquivalentverhältnis, bezogen auf die Isocyanatgruppen der Polyisocyanatkomponente und die Hydroxylgruppen der Polyolkomponente von 0,5:1 bis 5:1 entsprechen, und wobei die gegebenenfalls mitverwendeten Hilfs- und Zusatzstoffe der wäßrigen Polyolkomponente vor der Zugabe der Polyisocyanatkomponente einverleibt werden, **dadurch gekennzeichnet, daß** die in A) vorliegende Polyolkomponente zu 100 Gew.-% aus mindestens einem Carboxylat- und Hydroxylgruppen aufweisenden, mit Vinylmonomeren gepfropften Polyesterharz besteht, welches ein Molekulargewicht Mn von 1500 bis 50.000, eine Hydroxylzahl von 20 bis 300 mg KOH/g Substanz und eine Säurezahl von 10 bis 80 mg KOH/g Substanz aufweist, wobei 25 bis 100 % der dise Säurezahl bewirkenden Carboxylgruppen in der Carboxylatform vorliegen, und das Umsetzungsprodukt aus
I. 99 bis 2 Gew.-% einer Monomermischung aus:
1. 1 bis 100 Gew.-% α,β-ungesättigter Mono- oder Dicarbonsäuren mit 3 bis 16 C-Atomen,
2. 0 bis 70 Gew.-% hydroxyfunktioneller Alkylester der (Meth)-acrylsäure mit gegebenenfalls Ethergruppen aufweisenden Hydroxyalkylresten mit 2 bis 12 Kohlenstoffatomen,
3. 0 bis 98 Gew.-% (Meth)acrylsäure(cyclo)alkylester mit 1 bis 20 C-Atomen im Alkylrest und
4. 0 bis 80 Gew.-% anderer copolymerisierbarer Verbindungen,
wobei sich die zu 1. bis 4. gemachten Prozentangaben zu 100 % ergänzen und
II. 1 bis 98 Gew.-% eines Polyesterpolyols mit einer Hydroxylzahl von 10 bis 500 mg KOH/g Substanz, einer Säurezahl von <30 mg KOH/g Substanz und einem Gehalt an Doppelbindungen (berechnet als C=C, Molekulargewicht = 24) von 0 bis 15 %,
wobei sich die zu I. und II. gemachten Prozentangaben zu 100 % ergänzen, darstellt.

8. Verwendung der Bindemittelkombinationen gemäß Anspruch 1 bis 6 als Bindemittel für Lacke, Beschichtungsoder Dichtmassen.

## Claims

1. Aqueous binder combination for the production of coating compositions consisting of:
A) an aqueous solution or dispersion of an organic polyol component and
B) a polyisocyanate component of a viscosity at 23°C of 50 to 10000 mPa·s, consisting of at least one organic polyisocyanate or a blend of at least one organic polyisocyanate with an inert solvent, the quantity of which is calculated such that at most 20 wt.% of solvent, relative to the quantity of water, is present in the ultimately obtained coating compositions, wherein the solvent optionally still present in the polyester dispersions or solutions is also included in the calculation, which component is emulsified in component A), wherein the NCO/OH equivalent ratio, relative to the isocyanate groups of component B) and the hydroxyl groups of the polyol component present in A), is 0.5:1 to 5:1,
**characterised in that** at least 100 wt.% of the polyol component present in A) consists of a polyester resin containing carboxylate and hydroxyl groups and grafted with vinyl monomers, which resin has a molecular weight Mₙ of 1500 to 50000, a hydroxyl value of 20 to 300 mg of KOH/g of substance and an acid value of 10 to 80 mg of KOH/g of substance, wherein 25 to 100% of the carboxyl groups bringing about this acid value are present in carboxylate form, and is the reaction product of
I. 99-2 wt.% of a monomer mixture of:
1) 1-100 wt.% of α,β-unsaturated mono- or dicarboxylic acid with 3 to 16 C atoms,
2) 0-70 wt.% of hydroxy-functional alkyl ethers of (meth)acrylic acid with hydroxyalkyl residues having 2 to 12 carbon atoms and optionally containing ether groups,
3) 0-98 wt.% of (meth)acrylic acid (cyclo)alkyl esters with 1 to 20 C atoms in the alkyl residue and
4) 0-80 wt.% of other copolymerisable compounds,
wherein the percentages stated in 1) to 4) add up to 100% and
II. 1-98 wt.% of a polyester polyol with a hydroxyl value of 10 to 500 mg of KOH/g of substance, an acid value of < 30 mg of KOH/g of substance and a double bond content (calculated as C=C, molecular weight = 24) of 0 to 15%,
wherein the percentages stated in I and II add up to 100%.

2. Aqueous binder combination according to claim 1, **characterised in that** component A) has a water content of 35 to 85 wt.% and a pH value of 5 to 10.

3. Aqueous binder combination according to claims 1 and 2, **characterised in that** the polyester resin present dissolved or dispersed in component A) and grafted with vinyl monomers is the reaction product of
I. 95-10 wt.% of a monomer mixture of:
1) 1-50 wt.% of α,β-unsaturated mono- or dicarboxylic acid,
2) 0-50 wt.% of hydroxy-functional esters of (meth)acrylic acid,
3) 0-90 wt.% of (meth)acrylic acid alkyl esters with 1 to 18 C atoms in the alkyl residue and
4) 0-60 wt.% of other copolymerisable compounds,
wherein the percentages stated in 1) to 4) add up to 100% and
II. 5-90 wt.% of a polyester polyol with a hydroxyl value of 80 to 350 mg of KOH/g of substance, an acid value of < 10 mg of KOH/g of substance and a double bond content of 0.01 to 10%,
wherein the percentages stated in I and II add up to 100%.

4. Aqueous binder combination according to claims 1 to 3, **characterised in that** the polyester polyol constituting the grafting backbone of the grafted polyester resin is the reaction product of
a₁) 0 to 60 wt.% of monocarboxylic acids with 6 to 22 carbon atoms,
a₂) 10 to 65 wt.% of di-, tri- and/or tetracarboxylic acids or the anhydrides thereof,
a₃) 15 to 70 wt.% of di- and/or more highly functional alcohols,
a₄) 0 to 30 wt.% of monoalcohols,
a₅) 0 to 25 wt.% of hydroxycarboxylic acids, lactones, aminoalcohols and/or aminocarboxylic acids and
a₆) 0 to 60 wt.% of (cyclo)aliphatic, unsaturated mono- or dicarboxylic acids,
wherein the percentages stated in a₁) to a₆) add up to 100%.

5. Aqueous binder combination according to claims 1 to 4, **characterised in that** the polyester resin constituting the grafting backbone is a polyester polyol modified with urethane groups.

6. Aqueous binder combination according to claims 1 to 5, **characterised in that** the component A) polyester resin grafted with vinyl monomers has a molecular weight Mₙ of 3000 to 25000, a hydroxyl value of 45 to 200 mg of KOH/g of substance and an acid value of 14 to 45 mg of KOH/g of substance, wherein 40 to 100% of the carboxyl . groups bringing about this acid value are present in carboxylate form.

7. Process for the production of coating compositions according to claim 1, which consist of an aqueous binder combination and optionally auxiliary substances and additives known from lacquer technology, by emulsifying a polyisocyanate component B) of a viscosity at 23°C of 50 to 10000 mPa·s consisting of at least one organic polyisocyanate or a blend of at least one organic polyisocyanate with an inert solvent, the quantity of which is calculated such that at most 20 wt.% of solvent, relative to the quantity of water, is present in the ultimately obtained coating compositions according to the invention, wherein the solvent optionally still present in the polyester dispersions or solutions is also included in the calculation, in an aqueous solution or dispersion A) of an organic polyol component, wherein the quantity ratios of the two components correspond to an NCO/OH equivalent ratio, relative to the isocyanate groups of the polyisocyanate component and the hydroxyl groups of the polyol component, of 0.5:1 to 5:1 and wherein the optionally used auxiliary substances and additives are incorporated into the aqueous polyol component before the addition of the polyisocyanate component, **characterised in that** at least 100 wt.% of the polyol component present in A) consists of a polyester resin containing carboxylate and hydroxyl groups and grafted with vinyl monomers, which resin has a molecular weight Mₙ of 1500 to 50000, a hydroxyl value of 20 to 300 mg of KOH/g of substance and an acid value of 10 to 80 mg of KOH/g of substance, wherein 25 to 100% of the carboxyl groups bringing about this acid value are present in carboxylate form, and is the reaction product of
I. 99-2 wt.% of a monomer mixture of:
1) 1-100 wt.% of α,β-unsaturated mono- or dicarboxylic acid with 3 to 16 C atoms,
2) 0-70 wt.% of hydroxy-functional alkyl esters of (meth)acrylic acid with hydroxyalkyl residues having 2 to 12 carbon atoms and optionally containing ether groups,
3) 0-98 wt.% of (meth)acrylic acid (cyclo)alkyl esters with 1 to 20 C atoms in the alkyl residue and
4) 0-80 wt.% of other copolymerisable compounds,
wherein the percentages stated in 1) to 4) add up to 100% and
II. 1-98 wt.% of a polyester polyol with a hydroxyl value of 10 to 500 mg of KOH/g of substance, an acid value of < 30 mg of KOH/g of substance and a double bond content (calculated as C=C, molecular weight = 24) of 0 to 15%,
wherein the percentages stated in I and II add up to 100%.

8. Use of the binder combinations according to claims 1 to 6 as a binder for lacquers, coating or sealing compositions.

## Revendications

1. Combinaison aqueuse de liant pour la préparation d'agents d'enduction, constituée par:
A) une solution ou une dispersion aqueuse d'un composant de polyol organique, et
B) un composant de polyisocyanate possédant une viscosité à 23°C de 50 à 10 000 mPa.s, constitué par au moins un polyisocyanate organique ou par un mélange d'au moins un polyisocyanate organique avec un solvant organique inerte dont la quantité est mesurée de telle sorte que, dans les agents d'enduction obtenus en définitive, au maximum 20% en poids de solvant, rapporté à la quantité d'eau, sont présents, en incluant également dans le calcul la quantité de solvant éventuellement encore présente dans les dispersions ou les solutions de polyesters, qui est présent en émulsion dans le composant A), le rapport d'équivalents NCO/OH, rapportés aux groupes isocyanates du composant B)et aux groupes hydroxyle du composant de polyol présent dans A) se situant de 0,5:1 à 5:1,
**caractérisée en ce que** le composant de polyol présent dans A) est constitué à 100 % en poids d'au moins une résine de polyester greffée avec des monomères vinyliques, présentant des groupes carboxylate et des groupes hydroxyle, qui présente un poids moléculaire Mn de 1500 à 50 000, un indice d'hydroxyle de 20 à 30 mg de KOH/g de substance et un indice d'acide de 10 à 8 mg de KOH/g de substance, 25 à 100% des groupes carboxyle responsables de cet indice d'acide étant présents sous la forme carboxylate, et représente le produit réactionnel constitué par :
I. de 99 à 2% en poids d'un mélange de monomères constitué par :
1) de 1 à 100% en poids d'acides mono- ou dicarboxyliques à insaturation α, β contenant de 3 à 16 atomes de carbone,
2) de 0 à 70% en poids d'esters alkyliques hydroxyfonctionnels d'acide (méth)acrylique contenant des radicaux hydroxyalkyle présentant éventuellement des groupes éthers, contenant de 2 à 12 atomes de carbone,
3) de 0 à 98% en poids d'esters (cyclo)alkyliques d'acide (méth)acrylique contenant de 1 à 2 atomes de carbone dans le radical alkyle, et
4) de 0 à 80% en poids d'autres composés copolymérisables,
les indications en pour cent fournies dans 1) à 4) se complétant pour donner 100%, et
II. de 1 à 98% en poids d'un polyesterpolyol possédant un indice d'hydroxyle de 10 à 500 mg de KOH/g de substance, un indice d'acide <30 mg de KOH/substance et une teneur en doubles liaisons (calculées comme C=C, poids moléculaire =.24) de 0 à 15%,
les indications en pour cent fournies dans I. et II. se complétant pour donner 100%.

2. Combinaison aqueuse de liant selon la revendication 1, **caractérisée en ce que** le composant A) présente une teneur en eau de 35 à 85% en poids et une valeur de pH de 5 à 10.

3. Combinaison aqueuse de liant selon les revendications 1 et 2, **caractérisée en ce que** la résine de polyester greffée avec des monomères vinyliques, présente sous forme dissoute ou dispersée dans le composant A), représente le produit réactionnel constitué par
I. de 95 à 10% en poids d'un mélange de monomères constitué par :
1) de 1 à 50% en poids d'acide mono- ou dicarboxylique à insaturation α, β,
2) de 0 à 50% en poids d'esters hydroxy-fonctionnels d'acide (méth)acrylique,
3) de 0 à 90% en poids d'esters alkyliques d'acide (méth)acrylique contenant de 1 à 18 atomes de carbone dans le radical alkyle, et
4) de 0 à 60% en poids d'autres composés copolymérisables,
les indications en pour cent fournies dans 1) à 4) se complétant pour donner 100%, et
II. de 5 à 90% en poids d'un polyesterpolyol possédant un indice d'hydroxyle de 80 à 350 mg de KOH/g de substance, un indice d'acide <10 mg de K H/g de substance et une teneur en doubles liaisons de 0,01 à 10%,
les indications en pour cent fournies dans I. et II. se complétant pour donner 100%.

4. Combinaison aqueuse de liant selon les revendications 1 à 3, **caractérisée en ce que** le polyesterpolyol représentant le substrat de greffage de la résine de polyester greffée représente le produit réactionnel de
a₁) de 0 à 60% en poids d'acides monocarboxylique: contenant de 6 à 22 atomes de carbone,
a₂) de 10 à 65% en poids d'acides di-, tri- et/ou tétracarboxyliques, respectivement de leurs anhydrides,
a₃) de 15 à 70% en poids d'alcools difonctionnels et/ou à fonctionnalité supérieure,
a₄) de 0 à 30% en poids de monoalcools,
a₅) de 0 à 25% en poids d'acides hydroxycarboxyliques,
de lactones, d'aminoalcools et/ou d'acides aminocarboxyliques, et
a₆) de 0 à 60% en poids d'acides mono- ou dicarboxyliques insaturés (cyclo)aliphatiques,
les indications en pour cent fournies dans a₁) à a₆) se complétant pour donner 100%.

5. Combinaison aqueuse de liant selon les revendications 1 à 4, **caractérisée en ce qu'**il s'agit, quant à la résine de polyester formant le substrat de greffage, d'un polyesterpolyol modifié par des groupes uréthane.

6. Combinaison aqueuse de liant selon les revendications 1 à 5, **caractérisée en ce que** la résine de polyester du composant A) greffée avec des monomères vinyliques présente un poids moléculaire Mn de 3000 à 25 000, un indice d'hydroxyle de 45 à 200 mg de KOH/g de substance et un indice d'acide de 14 à 45 mg de KOH/g de substance, de 40 à 100% des groupes carboxyle responsables de cet indice d'acide étant présents sous la forme carboxylate.

7. Procédé pour la préparation d'agents d'enduction selon la revendication 1, qui sont constitués par une combinaison aqueuse de liant et éventuellement par des adjuvants et des additifs connus dans la technologie des laques, des vernis ou des peintures, par émulsification d'un composant de polyisocyanate B) possédant une viscosité à 23°C de 50 à 10 000 mPa.s, constitué par au moins un polyisocyanate organique ou par un mélange d'au moins un polyisocyanate organique avec un solvant inerte dont la quantité est mesurée de telle sorte que, dans les agents d'induction selon l'invention obtenus en définitive, au maximum 20% en poids de solvant, rapportés à la quantité d'eau, sont présents, la quantité de solvant éventuellement encore présente dans les dispersions ou les solutions de polyesters étant incluse dans le calcul, dans une solution ou une dispersion aqueuse A) d'un composant de polyol organique, les proportions des deux composants correspondant à un rapport d'équivalents NCO/OH, rapporté aux groupes isocyanate du composant de polyisocyanate et aux groupes hydroxyle du composant de polyol, de 0,5:1 à 5:1, et dans lequel les adjuvants et les additifs du composant de polyol aqueux utilisés éventuellement de manière conjointe sont incorporés avant l'addition du composant de polyisoyanate, **caractérisé en ce que** le composant de polyol présent dans A) est constitué à 100 % en poids par au moins une résine de polyester greffée avec des monomères vinyliques, présentant des groupes carboxylate et des groupes hydroxyle, qui présente un poids moléculaire Mn de 1500 à 50 000, un indice d'hydroxyle de 20 à 300 mg de KOH/g de substance et un indice d'acide de 10 à 80 mg de KOH/g de substance, 25 à 100% des groupes carboxyle responsables de cet indice d'acide étant présents sous la forme carboxylate, et représente le produit réactionnel constitué par
I. de 99 à 2% en poids d'un mélange de monomères constitué par :
1) de 1 à 100% en poids d'acides mono- ou dicarboxyliques à insaturation α, β contenant de 3 à 16 atomes de carbone,
2) de 0 à 70% en poids d'esters alkyliques hydroxyfonctionnels d'acide (méth)acrylique contenant des radicaux hydroxyalkyle présentant éventuellement des groupes éthers, contenant de 2 à 12 tomes de carbone,
3) de 0 à 98% en poids d'esters (cyclo)alkyliques d'acide (méth)acrylique contenant de 1 à 20 atomes de carbone dans le radical alkyle, et
4) de 0 à 80% en poids d'autres composés copolymérisables,
les indications en pour cent fournies dans 1) à 4) se complétant pour donner 100%, et
II. de 1 à 98% en poids d'un polyesterpolyol possédant un indice d'hydroxyle de 10 à 500 mg de K H/g de substance, un indice d'acide <30 mg de KOH/substance et une teneur en doubles liaisons (calculées comme C=C, poids moléculaire = 24) de 0 à 15%,
les indications en pour cent fournies dans I. et II. se complétant pour donner 100%.

8. Utilisation des combinaisons de liants selon les revendications 1 à 6, comme liants pour des laques, des vernis ou des peintures, des matières d'enduction ou d'étanchéification.
